# DEMANDE DE BREVET EUROPEEN

(11) **EP 4 485 645 A2**
(43) Date de publication de la demande: **01.01.2025**
(21) Numéro de dépôt: 24179352.0
(22) Date de dépôt: 31.05.2024
(51) Int. Cl.: H01M 50/20, H01M 50/296, H01M 50/55, H01M 50/557, H01M 50/588, H01M 50/591

(54) **MODULE D'ACCUMULATEURS SÉCURISÉE**

(30) Priorité: 07.06.2023 FR 2305718
(71) Demandeur: Ampere SAS, 92100 Boulogne-Billancourt (FR)
(72) Inventeur: CHIBANI, Ahmed, 78280 Guyancourt (FR); TESSIER, Ludovic, 78280 Guyancourt (FR)
(74) Mandataire: Renault Group

(57) **Abrégé**

L'invention se rapporte à un module d'accumulateurs (10) pour véhicule électrique comprenant : un caisson (12) contenant une pluralité d'accumulateurs et présentant une surface externe ; deux bornes méplates (34, 36) venant s'étendre localement dans une portion de ladite surface externe ; au moins un dispositif de protection (50, 52) adapté à venir recouvrir au moins l'une desdites deux bornes (34, 36). Ledit au moins un dispositif de protection (50, 52) est monté à pivotement de manière imperdable sur ladite portion de surface externe, au bord de ladite au moins l'une desdites deux bornes (34, 36), et ledit au moins un dispositif de protection (50, 52) est mobile entre la position dans laquelle il recouvre ladite au moins l'une desdites deux bornes (34, 36) et une position d'attente dans laquelle il découvre ladite au moins l'une desdites deux bornes.

## Description

La présente invention se rapporte à un module d'accumulateurs pour véhicule électrique.

Les batteries d'accumulateurs comprennent usuellement au moins un module prenant la forme d'un caisson, à l'intérieur duquel est installée une pluralité d'accumulateurs. Le caisson présente une paroi d'embase et quatre parois deux à deux en regard dressées sur la paroi d'embase, ainsi qu'une paroi de couvercle qui prend appui sur les quatre parois dressées pour refermer le caisson.

Le caisson forme ainsi un module et les accumulateurs sont reliés ensemble en série pour pouvoir obtenir entre les bornes du premier accumulateur et du dernier accumulateur une tension significative de l'ordre de quelques dizaines de volts, et pour certains modules, supérieure à 60 V.

La borne du premier accumulateur et la borne du dernier accumulateur sont alors respectivement reliées à une borne positive « + » et à une borne négative « - » du module, lesquelles débouchent dans la surface externe du caisson.

Usuellement, le caisson présente entre le couvercle et l'une des parois dressées, une zone de convergence de laquelle émergent les deux bornes.

Plus précisément, dans deux coins opposés du caisson, la paroi de couvercle présente une bordure en décrochement formant alors une feuillure, et les deux bornes débouchent alors de ces décrochements. Les deux bornes sont généralement de forme méplate et elles viennent s'étendre à l'affleurement de la bordure.

Ainsi, bien que les deux bornes soient relativement masquées puisqu'elles émergent des décrochements, au-delà de 60 V, les batteries sont livrées avec des capuchons jetables installés sur les bornes afin d'éviter l'électrocution des opérateurs. Lors du montage des batteries sur les véhicules, les capuchons sont retirés et les batteries sont raccordées au circuit électrique du véhicule via des « busbars ».

En revanche, lors du démontage des batteries déjà installées, pour des raisons de maintenance ou de réparation, les risques d'électrocution demeurent.

Aussi, un problème qui se pose et que vise à résoudre la présente invention est de fournir un module d'accumulateurs qui permettent de préserver les opérateurs lorsqu'elle est manipulée, notamment lors de son démontage.

Dans le but de résoudre ce problème, il est proposé un module d'accumulateurs pour véhicule électrique comprenant : un caisson contenant une pluralité d'accumulateurs et présentant une surface externe ; deux bornes méplates venant s'étendre localement dans une portion de ladite surface externe ; et, au moins un dispositif de protection adapté à venir recouvrir au moins l'une desdites deux bornes.

Et, ledit au moins un dispositif de protection est monté à pivotement de manière imperdable sur ladite portion de surface externe, au bord de ladite borne, et ledit au moins un dispositif de protection est mobile entre la position dans laquelle il recouvre ladite au moins l'une desdites deux bornes et une position d'attente dans laquelle il découvre ladite borne.

Ainsi, une caractéristique de l'invention réside dans la mise en oeuvre d'un dispositif de protection à demeure sur le module d'accumulateurs et qui puisse être mis en oeuvre simplement. Le dispositif de protection est avantageusement installé sur les deux bornes du module. De la sorte, durant le stockage et la livraison des modules d'accumulateurs, le dispositif de protection recouvre les bornes. Et lorsqu'il s'agit de les installer sur le véhicule, les bornes sont alors découvertes en entraînant les dispositifs de protection en pivotement, lesquels restent prisonniers de la surface externe près de la borne correspondante. Si le module d'accumulateurs doit être démonté ultérieurement, les dispositifs de protection pourront alors être réutilisés et entraînés en pivotement pour pouvoir recouvrir les bornes et préserver ainsi les opérateurs d'électrocution.

Le dispositif de protection est avantageusement relié à la portion de surface externe par des organes formant une charnière pour être à la fois imperdable et être monté à pivotement.

Selon un mode de mise en oeuvre de l'invention particulièrement avantageux, ledit caisson comprend au moins un organe de verrouillage pour maintenir ledit au moins un dispositif de protection en position fixe lorsqu'il recouvre ladite borne. De la sorte, on prévient le risque de découvrement intempestif de la borne, notamment lors des manipulations du module d'accumulateurs.

En outre, et à l'opposé, ledit caisson comprend avantageusement au moins un autre organe de verrouillage pour maintenir ledit au moins un dispositif de protection en position fixe lorsqu'il découvre ladite borne. De la sorte, le dispositif de protection est préservé durant les phases de montage et de démontage du module d'accumulateurs.

Préférentiellement, ledit au moins un autre organe de verrouillage comprend une languette flexible terminée par un ergot. De la sorte, le dispositif de protection vient en prise automatiquement, lorsque le dispositif de protection est écarté de la borne. En effet, la languette flexible fléchie à mesure que le dispositif de protection est entraîné en pivotement, puis se relâche lorsqu'il arrive en fin de course pour que l'ergot puisse venir en prise dans le dispositif de protection.

Avantageusement, ledit au moins un organe de verrouillage comprend également une languette flexible terminée par un ergot comme on l'expliquera plus en détail dans la suite de la description.

Aussi, ledit caisson comprend deux parois sensiblement perpendiculaires entre elles convergeant l'une vers l'autre dans une zone définissant ladite portion de surface externe, et ladite borne s'étend alors dans une bordure de l'une desdites parois.

Selon une première variante d'exécution, ledit dispositif de protection est monté à pivotement sur la bordure de ladite paroi selon un axe de pivotement sensiblement perpendiculaire à l'autre desdites parois. En conséquence, le dispositif de protection peut venir s'étendre sur la bordure qu'il soit dans une position où il recouvre la borne ou bien à l'opposé, dans une position où il la découvre.

Selon une seconde variante d'exécution, ledit dispositif de protection est monté à pivotement sur une bordure de l'autre desdites deux parois selon un axe de pivotement sensiblement parallèle auxdites deux parois. La bordure de l'autres desdites deux parois longe alors la bordure de ladite une desdites parois.

En outre, et de façon particulièrement avantageuse, ledit dispositif de protection est mobile en pivotement entre ladite position dans laquelle il recouvre ladite au moins l'une desdites deux bornes et ladite position d'attente dans laquelle il vient s'appliquer contre ladite bordure de l'autre desdites deux parois. Autrement dit, le dispositif de protection est mobile en pivotement sur une amplitude de trois quarts de tour. Il peut venir en applique contre la bordure de l'autres desdites deux parois afin d'être préservé durant la manipulation du module d'accumulateurs.

De plus, ledit dispositif de protection comprend avantageusement un volet monté à coulissement selon une direction perpendiculaire audit axe de pivotement parallèle auxdites deux parois. De la sorte, le volet peut être déployé de manière à recouvrir le plus complètement possible la borne, tandis qu'il peut être coulissé dans le dispositif de protection lorsqu'il est en applique contre la bordure de l'autres desdites deux parois. En conséquence, le dispositif de protection est peu encombrant lorsqu'il n'est pas fonctionnel.

Préférentiellement, ladite bordure de l'une desdites deux parois est en décrochement par rapport à ladite paroi. De la sorte, la borne, tout comme le dispositif de protection, est préservée durant les manipulations du module d'accumulateurs.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1] est une vue schématique en perspective de dessus d'un module d'accumulateurs selon une première variante de réalisation de l'invention dans un premier état ;
[Fig. 2] est une vue schématique de détail de l'objet de la [Fig. 1] ;
[Fig. 3] est une vue schématique de l'objet de la [Fig. 2] dans un état intermédiaire ;
[Fig. 4] est une vue schématique de détail de l'objet de la [Fig. 2] dans un deuxième état ;
[Fig. 5] est une vue schématique en perspective de dessus d'un module d'accumulateurs selon l'invention conformément à une seconde variante de réalisation dans un premier état ;
[Fig. 6] est une vue schématique de détail de l'objet de la [Fig. 5] dans un deuxième état ;
[Fig. 7] est une vue schématique de l'objet de la [Fig. 6] dans un troisième état ; et,
[Fig. 8] est une vue schématique de l'objet de la [Fig. 6] dans un quatrième état.

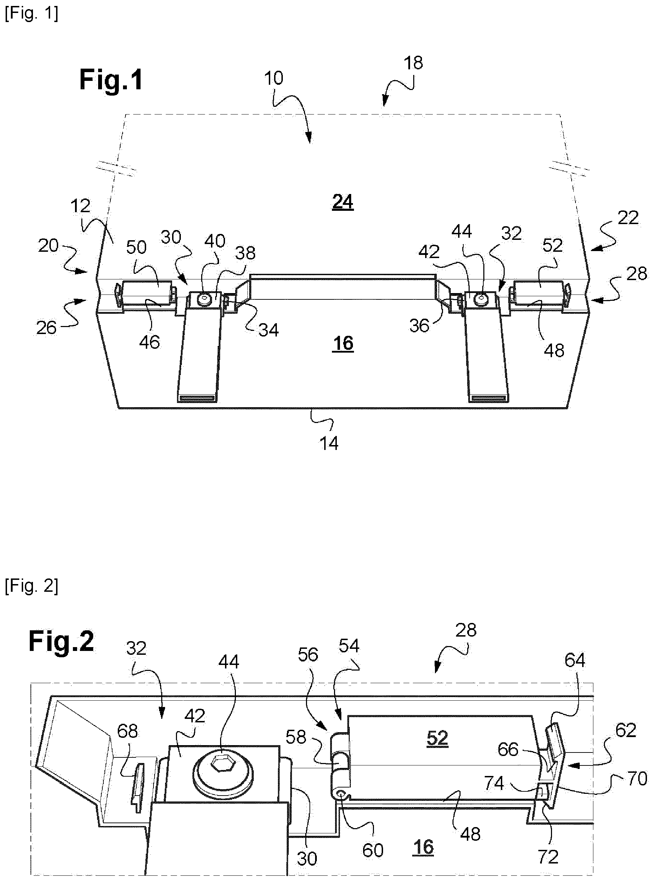

La [Fig. 1] montre un module d'accumulateurs 10 conforme à l'invention selon une première variante de réalisation et telle qu'installée dans un véhicule automobile.

Le module d'accumulateurs 10 comprend un caisson 12, de forme générale parallélépipédique rectangle et renfermant une pluralité d'accumulateurs. Les accumulateurs sont ici par exemple des cellules électrochimiques de type lithium-ion.

Le caisson 12 présente une paroi inférieure 14 formant embase et quatre parois, dressées deux 16, 18 à deux 20, 22 en regard sur les bordures de ladite paroi inférieure 14. Sur la [Fig. 1], la paroi antérieure 16 est opposée à la paroi postérieure 18, tandis que sont également opposées l'une de l'autre, les deux parois latérales 20, 22.

Aussi, le caisson 12 est refermé par un couvercle 24 qui prend appui sur le dessus des quatre parois 16, 18, 20, 22.

Par ailleurs, dans les deux coins antérieurs opposés, le coin antérieur gauche 26, et le coin antérieur droit 28, une partie de bordure antérieure gauche 30 du couvercle 24 et une partie de bordure antérieure droite 32, s'étendent en décrochement par rapport au plan moyen défini par le couvercle 24.

Ainsi, les accumulateurs sont reliés en série entre une borne positive méplate 34 et une borne négative méplate 36, lesquelles débouchent respectivement sur la partie de bordure antérieure gauche 30 et sur la partie de bordure antérieure droite 32. On observera que les bornes méplates positive 34 et négative 36 ne s'étendent pas au-delà des bordures gauche 30 et droite 32, respectivement.

Aussi, la borne positive méplate 34 reçoit à plat, un premier « busbar » 38 maintenu en appui à force par une première vis de fixation 40, tandis que la borne négative méplate 36 reçoit à plat, un second « busbar » 42 maintenu par une deuxième vis de fixation 44.

En outre, la partie de bordure antérieure gauche 30 et celle de la bordure antérieure droite 32 débouchent respectivement dans les deux parois latérales 20, 22, et elles présentent respectivement une portion surélevée gauche 46 et une portion surélevée droite 48, s'étendant respectivement entre les bornes positive 34 et négative 36 et les parois latérales 20, 22.

Sur ces portions surélevées 46, 48, sont installés de manière imperdable, un dispositif de protection gauche 50, et un dispositif de protection droit 52. Les dispositifs de protection gauche 50 et droit 52 sont ici dans des positions d'attente. Les dispositifs de protection 50, 52 sont réalisées dans un matériau polymère ou dans tout autre matériau non conducteur de l'électricité, d'une forme parallélépipédique rectangle. Leur largeur est sensiblement inférieure à celle des bordures 30, 32, tandis que leur longueur est supérieure à la largeur des bornes 34, 36, par exemple une fois et demie leur largeur.

Aussi, on se rapportera à la [Fig. 2] montrant plus en détail le coin antérieur droit 28 tel qu'illustré sur la [Fig. 1], afin de décrire plus précisément le dispositif de protection droit 52 et son mode de fonctionnement. On observera que le dispositif de protection gauche 50 est totalement symétrique par rapport à un plan médian du module d'accumulateurs 10 et fonctionne de la même façon.

Ainsi, on retrouve sur cette [Fig. 2] la partie de bordure antérieure droite 32 en décrochement dans laquelle vient s'étendre la borne méplate négative 36. On retrouve également la portion surélevée droite 48 sur laquelle est installé le dispositif de protection droit 52. On observera que le dispositif de protection droit 52 est moulé d'une seule pièce dans un matériau polymère.

Le dispositif de protection 52 présente une première extrémité de liaison 54 munie d'une chape 56, tandis que la portion surélevée 48 est équipée, près du bord de la borne 36, d'un tenon d'ancrage 58 relié à la chape 56 par l'intermédiaire d'une tige 60. Ainsi, le dispositif de protection 52 est relié à la portion surélevée 48 de manière imperdable et au surplus, à pivotement.

La tige 60 s'étend selon une direction sensiblement perpendiculaire à la paroi antérieure 16. Partant, le dispositif de protection 52 est monté à pivotement autour de la tige 60.

À l'opposé, le dispositif de protection 52 présente un organe d'accrochage en T 62. Il comprend une première aile 64 présentant un premier retour 66 sensiblement parallèle à la tige 60. Aussi, on observera qu'à l'opposé, par rapport au tenon ancrage 58, soit de l'autre côté de la borne négative 36, la bordure antérieure 32 présente une première aile d'accrochage complémentaire 68.

L'organe d'accrochage en T 62 comprend en outre une seconde aile 70 opposée à la première aile 64 et munie d'un second retour 72 en prise dans une seconde aile d'accrochage complémentaire 74.

Grâce à cette seconde aile 70, le dispositif de protection 52 est maintenu en position fixe en appui sur la portion surélevée 48. De la sorte, le dispositif de protection 52 est préservé dans la bordure antérieure 32 en décrochement.

Aussi, dès lors qu'une intervention est opérée sur le module d'accumulateurs 10, ou que son remplacement est nécessaire, la deuxième vis de fixation 44 est dévissée et le second « busbar » 42 est désolidarisé de la borne négative 36.

Le premier « busbar » 38 est désolidarisé de la borne positive 34 de la même façon.

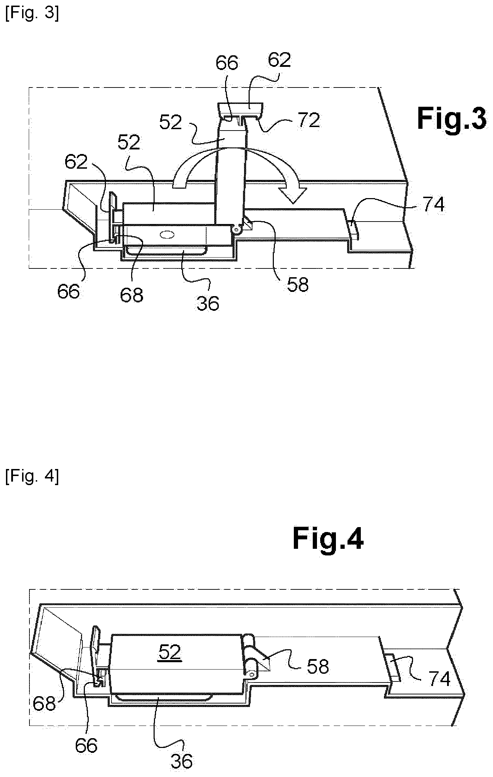

Partant, on peut venir appliquer ensuite le dispositif de protection 52 sur la borne négative 36. Pour ce faire, on entraîne en fléchissement l'organe d'accrochage en T 62 de manière à dégager le second retour 72 de l'aile d'accrochage complémentaire 74. Puis on entraîne en pivotement le dispositif de protection 52 autour de la tige 60 comme illustré sur la [Fig. 3].

Aussi, le dispositif de protection 52 est représenté dans une autre position, transparent pour les besoins de la description, et appliqué contre la borne négative 36, tandis que le premier retour 66 vient en prise dans la première aile d'accrochage complémentaire 68 grâce à la flexibilité de l'organe d'accrochage en T 62.

De la sorte, comme illustré sur la [Fig. 4], le dispositif de protection 52 est maintenu en position fixe en applique contre la borne négative 36.

Partant, la borne négative 36 est masquée et il n'y a pas de risque de contact inopiné avec un élément conducteur de l'électricité ou bien qu'un opérateur y porte la main.

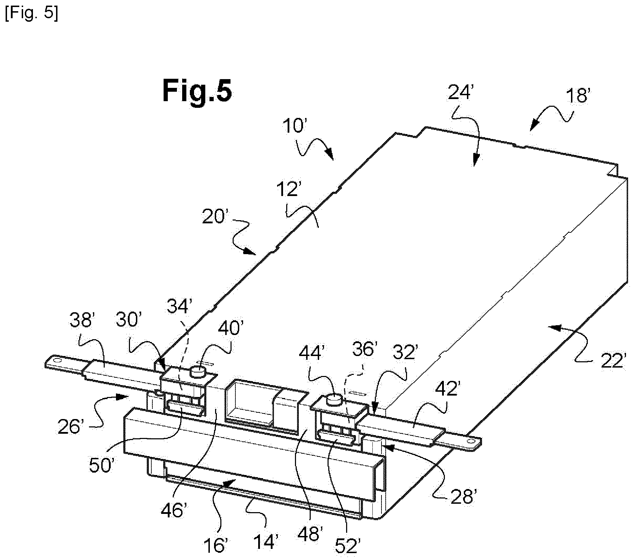

La [Fig. 5] montre un module d'accumulateurs 10' conforme à l'invention selon une deuxième variante de réalisation. Aussi, les caractéristiques analogues fonctionnellement à celles de la première variante de réalisation porteront la même référence affectées d'un signe prime : « ' ».

Ainsi, le module d'accumulateurs 10' comprend un caisson 12', de forme parallélépipédique rectangle et renfermant une pluralité d'accumulateurs.

Le caisson 12' présente une paroi inférieure 14' formant embase et quatre parois dressées deux 16', 18' à deux 20', 22' en regard sur les bordures de ladite paroi inférieure 14'.

Aussi, le caisson 12' est refermé par un couvercle 24' qui prend appui sur le dessus des quatre parois 16', 18', 20', 22'.

Par ailleurs, dans les deux coins antérieurs opposés, 26', 28', une partie de bordure antérieure gauche 30' du couvercle 24' et une partie de bordure antérieure droite 32', s'étendent en décrochement par rapport au plan moyen défini par le couvercle 24'.

Ainsi, les accumulateurs sont reliés en série entre une borne positive méplate 34', masquée par un premier « busbar » 38' maintenu en appui à force par une première vis de fixation 40', et une borne négative méplate 36' masquée par un second « busbar » 42' maintenu par une deuxième vis de fixation 44'.

Les bornes méplates positive 34' et négative 36' débouchent respectivement sur la partie de bordure antérieure gauche 30' et sur la partie de bordure antérieure droite 32'.

Par ailleurs, la paroi antérieure 16' présente une portion gauche 46' et à l'opposé une portion droite 48' sur lesquelles sont respectivement installés de manière imperdable, un dispositif de protection gauche 50' et un dispositif de protection droite 52'. Les dispositifs de protection gauche 50' et droite 52' comprennent chacune deux pièces réalisées dans un matériau polymère et coopérant l'une avec l'autre. On les décrira plus en détail ci-après.

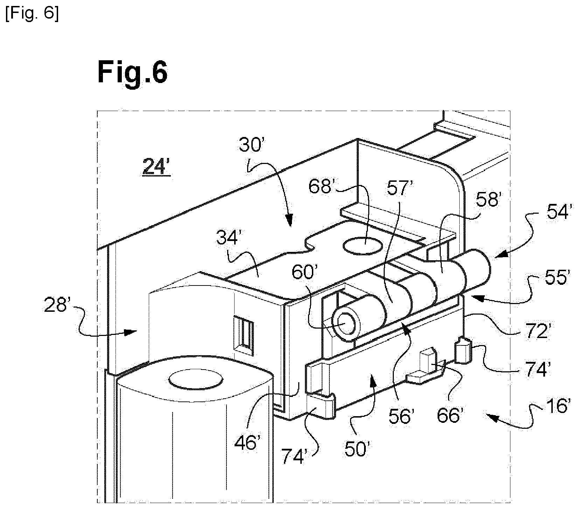

On se rapportera tout d'abord à la [Fig. 6] montrant plus en détail le coin antérieur gauche 26', tel qu'illustré sur la [Fig. 5], débarrassé du premier « busbar » 38' pour pouvoir décrire plus précisément le dispositif de protection gauche 50'.

Bien entendu, le dispositif de protection droit 52' est symétrique du dispositif de protection gauche 50' par rapport à un plan médian du module d'accumulateurs 10' et fonctionne de la même façon.

On retrouve sur cette [Fig. 6] la partie de bordure antérieure gauche 30' en décrochement dans laquelle vient s'étendre la borne méplate positive 34'. On retrouve également la portion de bordure antérieure gauche 46' sur laquelle est installé le dispositif de protection droit 50'.

Ainsi, le dispositif de protection 50' présente une première extrémité de liaison 54' munie d'une paire de chapes contiguës 55', 56', tandis que la bordure antérieure gauche 46' est équipée, près du bord de la borne positive 34', d'une paire de tenons d'ancrage 57', 58' reliés à la paire de chapes 55', 56' par l'intermédiaire d'une tige 60' de manière à former charnière.

Les tenons d'ancrage 57', 58' s'étendent en saillie de la bordure antérieure gauche 46'. Ainsi, le dispositif de protection 50' est relié à la portion de bordure antérieure gauche 46' de manière imperdable et au surplus, à pivotement.

La tige 60' s'étend selon une direction sensiblement parallèle à la paroi antérieure 16' et au couvercle 24'. Partant, le dispositif de protection 50' est monté à pivotement autour de la tige 60'.

Aussi, le dispositif de protection 50' présente une largeur sensiblement égale à la largeur de la borne 34'. Par ailleurs, le dispositif de protection 50' présente un plot d'ancrage 66', tandis que la borne 34' présente un orifice 68' permettant, non seulement le vissage du "busbar", mais aussi la réception du plot d'ancrage 66' comme on l'expliquera ci-après.

En outre, il présente une paire de languettes d'accrochage 72', tandis que la bordure antérieure gauche 46' présente une paire d'ergots d'accrochage 74', dans laquelle la paire de languettes d'accrochage 72' est en prise. De la sorte, le dispositif de protection 50' est maintenu en position fixe contre la bordure antérieure gauche 46'.

Lorsque l'on souhaite masquer la borne méplate positive 34', on écarte les ergots d'accrochage 74' l'un de l'autre pour libérer le dispositif de protection 50'. Puis on l'entraîne en pivotement autour de l'axe de la tige 60'.

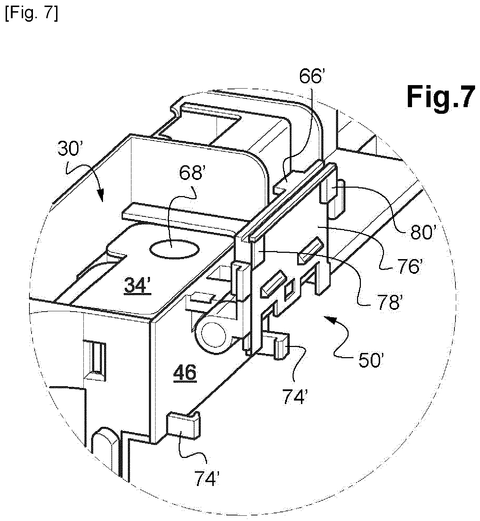

On se reportera sur la [Fig. 7], où le dispositif de protection 50' a été entraîné en pivotement de 180° par rapport à sa position sur la [Fig. 6].

Aussi, le dispositif de protection 50' comprend au surplus un volet 76' monté à coulissement dans deux glissières latérales 78', 80'.

Le dispositif de protection 50' est alors adapté à être pivoté de 90° supplémentaires pour venir s'appliquer contre la borne méplate positive 34', tandis que le plot d'ancrage 66' vient en prise dans l'orifice 68' de la borne 34'.

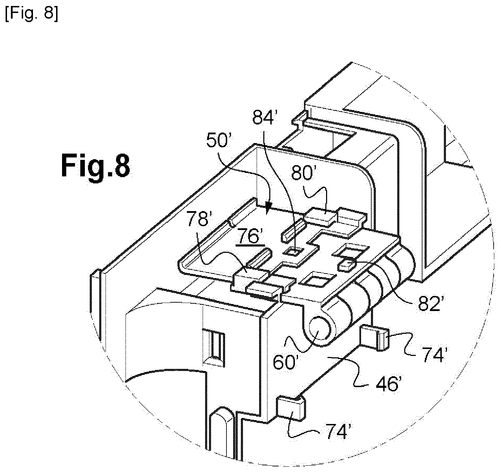

Ensuite, le volet 76' est apte à être entraîné en translation pour venir recouvrir entièrement la borne méplate 34' comme illustré sur la [Fig. 8]. Partant, la borne méplate négative 34' est entièrement masquée par le dispositif de protection 50' et son volet coulissant 76'.

Aussi, dans le coin antérieur droit 28', la borne méplate positive 34' peut être recouverte de la même manière.

Sur cette dernière [Fig. 8] apparaît en outre, sur le dispositif de protection 50', un plot d'accrochage 82' adapté à venir en prise dans une lumière d'accrochage 84' ménagée dans le volet 76' lorsque celui-ci est escamoté. De la sorte, le volet 76' peut être maintenu en position fixe par rapport au dispositif de protection 50' lorsque celui-ci est replié contre la bordure antérieure 46'. Grâce à ce volet 76' escamotable, le dispositif de protection 50' est moins encombrant.

## Revendications

1. Module d'accumulateurs (10) pour véhicule électrique comprenant :
- un caisson (12) contenant une pluralité d'accumulateurs et présentant une surface externe ;
- deux bornes méplates (34, 36) venant s'étendre localement dans une portion de ladite surface externe ;
- au moins un dispositif de protection (50, 52) adapté à venir recouvrir au moins l'une desdites deux bornes (34, 36) ;
**caractérisée en ce que** ledit au moins un dispositif de protection (50, 52) est monté à pivotement de manière imperdable sur ladite portion de surface externe, au bord de ladite borne (34, 36),
et **en ce que** ledit au moins un dispositif de protection (50, 52) est mobile entre la position dans laquelle il recouvre ladite borne (34, 36) et une position d'attente dans laquelle il découvre ladite borne.

2. Module d'accumulateurs selon la revendication 1, **caractérisée en ce que** ledit caisson (12) comprend au moins un organe de verrouillage (68) pour maintenir ledit au moins un dispositif de protection (52) en position fixe lorsqu'il recouvre ladite borne.

3. Module d'accumulateurs selon la revendication 1 ou 2, **caractérisé en ce que** ledit caisson (12) comprend au moins un autre organe de verrouillage (74) pour maintenir ledit au moins un dispositif de protection (52) en position fixe lorsqu'il découvre ladite borne.

4. Module d'accumulateurs selon la revendication 3, **caractérisé en ce que** ledit au moins un autre organe de verrouillage (74) comprend une languette flexible terminée par un ergot.

5. Module d'accumulateurs selon l'une quelconque des revendications 1 à 4, **caractérisé en ce que** ledit caisson (12) comprend deux parois (24, 16) sensiblement perpendiculaires entre elles convergeant l'une vers l'autre dans une zone définissant ladite portion de surface externe, ladite borne s'étendant dans une bordure (32) de l'une (24) desdites parois.

6. Module d'accumulateurs selon la revendication 5, **caractérisé en ce que** ledit dispositif de protection (52) est monté à pivotement sur la bordure de ladite paroi selon un axe de pivotement (60) sensiblement perpendiculaire à l'autre (16) desdites parois.

7. Module d'accumulateurs selon la revendication 5, **caractérisé en ce que** ledit dispositif de protection (50') est monté à pivotement sur une bordure (46') de l'autre (16) desdites deux parois selon un axe de pivotement (60') sensiblement parallèle auxdites deux parois (16, 24).

8. Module d'accumulateurs selon la revendication 7, **caractérisé en ce que** ledit dispositif de protection (50') est mobile en pivotement entre la ladite position dans laquelle il recouvre ladite au moins l'une (34) desdites deux bornes et ladite position d'attente dans laquelle il vient s'appliquer contre ladite bordure (46') de l'autre (16') desdites deux parois.

9. Module d'accumulateurs selon la revendication 7 ou 8, **caractérisé en ce que** ledit dispositif de protection (50') comprend un volet (76') monté à coulissement selon une direction perpendiculaire audit axe de pivotement (60') parallèle auxdites deux parois (16', 24').

10. Module d'accumulateurs selon l'une quelconque des revendications 5 à 9, **caractérisé en ce que** ladite bordure (30, 32) de l'une (24) desdites deux parois est en décrochement par rapport à ladite parois (24).
